# EUROPEAN PATENT APPLICATION

(11) **EP 4 756 689 A1**
(43) Date of publication of application: **10.06.2026**
(21) Application number: 25220195.9
(22) Date of filing: 02.12.2025
(51) Int. Cl.: G06Q 10/10

(54) **METHOD AND SYSTEM FOR GRAPH PROCESSING BASED COMPUTATION OF PROJECT COMPLETION TIME**

(30) Priority: 06.12.2024 IN 202421096526
(71) Applicant: Tata Consultancy Services Limited, Maharashtra (IN)
(72) Inventor: CHOUGULE, Sandeep Govind, 411057 Pune, Maharashtra (IN); SADAPHAL, Vaishali Paithankar, 411028 Pune, Maharashtra (IN)
(74) Representative: Goddar, Heinz J.

(57) **Abstract**

Traditional algorithms for computing/estimating project completion time often fail to provide accurate project duration estimates. Pre-existing methods rely on project size and team size to estimate project duration and overlook the complex interdependencies between tasks and the variability in task execution times. System and method of proposed approach fetches a requirement vector of a target project as input. Further, a plurality of instance precedence graphs of the target project are generated by processing the requirement vector along with a merged probability graph. The merged probability graph represents a transition likelihood between different types of tasks based on a historical project data. Further, a plurality of projects that are similar to the target project are determined. Further, a completion time of the target project represented by the requirement vector is computed based on completion time of the plurality of projects that are similar to the target project.

## Description

### CROSS-REFERENCE TO RELATED APPLICATIONS AND PRIORITY

The present application claims priority to Indian application no. 202421096526, filed on December 06, 2024.

### TECHNICAL FIELD

The disclosure herein generally relates to project execution, and, more particularly, to a method and system for graph processing based computation of project completion time.

### BACKGROUND

Services such as software development, construction, and marketing, among others, are typically managed as projects. Failure to provide accurate estimate results in schedule delays, budgeting errors, and consequently, project failures.

Traditional algorithms often fail to provide accurate project duration estimates. The Constructive Cost Model (COCOMO) is one of the popular methodology for estimating software project duration. Pre-existing methods rely on project size and team size to estimate project duration and overlook the complex interdependencies between tasks and the variability in task execution times.

### SUMMARY

Embodiments of the present disclosure present technological improvements as solutions to one or more of the above-mentioned technical problems recognized by the inventors in conventional systems. For example, in one embodiment, a processor implemented method is provided. The method includes: fetching, via one or more hardware processors, a requirement vector of a target project as input, wherein the requirement vector represents count of tasks in the target project; generating, via the one or more hardware processors, a plurality of instance precedence graphs of the target project, by processing the requirement vector along with a merged probability graph, wherein the merged probability graph represents a transition likelihood between different types of tasks based on a historical project data; determining, via the one or more hardware processors, a plurality of projects that are similar to the target project represented by the plurality of instance precedence graph; and computing, via the one or more hardware processors, a completion time of the target project represented by the requirement vector, based on completion time of the plurality of projects that are similar to the target project.

In the method, the similarity between the target project and the plurality of similar projects is determined based on the requirement vector, present in each of the projects.

Further, in the method, the merged probability graph is generated based on the historical project data, comprising: generating, via the one or more hardware processors, a task execution sequence of each of a plurality of individual tasks in the historical project data; computing, via the one or more hardware processors, a plurality of precedence probabilities for the task execution sequence of each of the plurality of individual tasks; generating, via the one or more hardware processors, a plurality of precedence graphs, one each for each of the plurality of individual tasks, based on the computed plurality of precedence probabilities and a plurality of induced edges; and merging, via the one or more hardware processors, the plurality of precedence graphs to generate the merged probability graph.

Further, in the method, generating the instance precedence graph comprises: identifying, via the one or more hardware processors, a plurality of source tasktypes from a set of tasks (V); identifying, via the one or more hardware processors, a plurality of destination tasktypes from the merged probability graph; computing, via the one or more hardware processors, a requirement of destination tasktypes as a product of the plurality of destination tasktypes and the requirement vector; receiving, via the one or more hardware processors, a selection of a) a destination tasktype from the plurality of destination tasktypes, and b) a source tasktype from the plurality of source tasktypes, wherein, an edge is created between the selected source tasktype and the destination tasktype; and updating, via the one or more hardware processors, an initialized instance precedence graph and the requirement vector, based on the edge created between the selected source tasktype and the destination tasktype, wherein, the initialized instance precedence graph updated over a plurality of iterations forms the instance precedence graph.

Further, in the method, computing the completion time of the instance precedence graph comprises: processing, via the one or more hardware processors, a) a Directed Acyclic Graph (DAG) of the instance precedence graph, b) information on required time units for each of a plurality of task instances in the instance precedence graph as determined from information on the completion time of the plurality of projects that are similar to the target project, and c) a timeseries (TS) representing available time for each of a plurality of team members, comprising: assigning each of the plurality of task instances, starting from a root node of the DAG, to one or more available team members of the plurality of team members, for execution, wherein the assignment of each of the plurality of task instances is based on the information on a) the required time units for each of a plurality of task instances, and b) the available time for each of the plurality of team members; and computing the completion time as difference between a minimum start time and a maximum end time, for the plurality of task instances, upon completion of the execution of the plurality of task instances. The root node represents a first task, having all subsequent tasks forming a plurality of child nodes and one or more child nodes of each of the plurality of child nodes, of the root node, wherein, each of the subsequent tasks has a start time matching to end time or a time later than the end time of the first task.

In another aspect, a system is provided. The system includes one or more hardware processors, a communication interface, and a memory storing a plurality of instructions. The plurality of instructions cause the one or more hardware processors to: fetch a requirement vector of a target project as input, wherein the requirement vector represents count of tasks in the target project; generate a plurality of instance precedence graphs of the target project, by processing the requirement vector along with a merged probability graph, wherein the merged probability graph represents a transition likelihood between different types of tasks based on a historical project data; determine a plurality of projects that are similar to the target project represented by the plurality of instance precedence graph; and compute a completion time of the target project represented by the requirement vector, based on completion time of the plurality of projects that are similar to the target project.

Further, in the system, the one or more hardware processors are configured to determine the similarity between the target project and the plurality of similar projects based on the requirement vector, present in each of the projects.

Further, in the system, the one or more hardware processors are configured to generate the merged probability graph based on the historical project data, by: generating a task execution sequence of each of a plurality of individual tasks in the historical project data; computing a plurality of precedence probabilities for the task execution sequence of each of the plurality of individual tasks; generating a plurality of precedence graphs, one each for each of the plurality of individual tasks, based on the computed plurality of precedence probabilities and a plurality of induced edges; and merging the plurality of precedence graphs to generate the merged probability graph.

Further, in the system, the one or more hardware processors are configured to generate the instance precedence graph by: identifying a plurality of source tasktypes from a set of tasks (V); identifying a plurality of destination tasktypes from the merged probability graph; computing a requirement of destination tasktypes as a product of the plurality of destination tasktypes and the requirement vector; receiving a selection of a) a destination tasktype from the plurality of destination tasktypes, and b) a source tasktype from the plurality of source tasktypes, wherein, an edge is created between the selected source tasktype and the destination tasktype; and updating an initialized instance precedence graph and the requirement vector, based on the edge created between the selected source tasktype and the destination tasktype, wherein, the initialized instance precedence graph updated over a plurality of iterations forms the instance precedence graph.

Further, in the system, the one or more hardware processors are configured to compute the completion time of the instance precedence graph by: processing a) a Directed Acyclic Graph (DAG) of the instance precedence graph, b) information on required time units for each of a plurality of task instances in the instance precedence graph as determined from information on the completion time of the plurality of projects that are similar to the target project, and c) a timeseries (TS) representing available time for each of a plurality of team members, comprising: assigning each of the plurality of task instances, starting from a root node of the DAG, to one or more available team members of the plurality of team members, for execution, wherein the assignment of each of the plurality of task instances is based on the information on a) the required time units for each of a plurality of task instances, and b) the available time for each of the plurality of team members; and computing the completion time as difference between a minimum start time and a maximum end time, for the plurality of task instances, upon completion of the execution of the plurality of task instances.

Further, in the system, the root node represents a first task, having all subsequent tasks forming a plurality of child nodes and one or more child nodes of each of the plurality of child nodes of the root node, wherein, each of the subsequent tasks has a start time matching to end time or a time later than the end time of the first task.

In yet another aspect, there are provided one or more non-transitory machine-readable information storage media comprising one or more instructions which when executed by one or more hardware processors cause graph processing based computation of project completion time. The non-transitory computer readable medium includes a plurality of instructions, which when executed, cause one or more hardware processors to: fetch a requirement vector of a target project as input, wherein the requirement vector represents count of tasks in the target project; generate a plurality of instance precedence graphs of the target project, by processing the requirement vector along with a merged probability graph, wherein the merged probability graph represents a transition likelihood between different types of tasks based on a historical project data; determine a plurality of projects that are similar to the target project represented by the plurality of instance precedence graph; and compute a completion time of the target project represented by the requirement vector, based on completion time of the plurality of projects that are similar to the target project.

Further, the one or more non-transitory machine-readable information storage mediums causes the one or more hardware processors to determine the similarity between the target project and the plurality of similar projects based on the requirement vector, present in each of the projects.

Further, the one or more non-transitory machine-readable information storage mediums causes the one or more hardware processors to generate the merged probability graph based on the historical project data, by: generating a task execution sequence of each of a plurality of individual tasks in the historical project data; computing a plurality of precedence probabilities for the task execution sequence of each of the plurality of individual tasks; generating a plurality of precedence graphs, one each for each of the plurality of individual tasks, based on the computed plurality of precedence probabilities and a plurality of induced edges; and merging the plurality of precedence graphs to generate the merged probability graph.

Further, the one or more non-transitory machine-readable information storage mediums causes the one or more hardware processors to generate the instance precedence graph by: identifying a plurality of source tasktypes from a set of tasks (V); identifying a plurality of destination tasktypes from the merged probability graph; computing a requirement of destination tasktypes as a product of the plurality of destination tasktypes and the requirement vector; receiving a selection of a) a destination tasktype from the plurality of destination tasktypes, and b) a source tasktype from the plurality of source tasktypes, wherein, an edge is created between the selected source tasktype and the destination tasktype; and updating an initialized instance precedence graph and the requirement vector, based on the edge created between the selected source tasktype and the destination tasktype, wherein, the initialized instance precedence graph updated over a plurality of iterations forms the instance precedence graph.

Further, the one or more non-transitory machine-readable information storage mediums causes the one or more hardware processors to compute the completion time of the instance precedence graph by: processing a) a Directed Acyclic Graph (DAG) of the instance precedence graph, b) information on required time units for each of a plurality of task instances in the instance precedence graph as determined from information on the completion time of the plurality of projects that are similar to the target project, and c) a timeseries (TS) representing available time for each of a plurality of team members, comprising: assigning each of the plurality of task instances, starting from a root node of the DAG, to one or more available team members of the plurality of team members, for execution, wherein the assignment of each of the plurality of task instances is based on the information on a) the required time units for each of a plurality of task instances, and b) the available time for each of the plurality of team members; and computing the completion time as difference between a minimum start time and a maximum end time, for the plurality of task instances, upon completion of the execution of the plurality of task instances.

Further, the one or more non-transitory machine-readable information storage mediums causes, the root node represents a first task, having all subsequent tasks forming a plurality of child nodes and one or more child nodes of each of the plurality of child nodes, of the root node, wherein, each of the subsequent tasks has a start time matching to end time or a time later than the end time of the first task.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for computing project completion time, according to some embodiments of the present disclosure.
FIG. 2 is a flow diagram depicting steps involved in the process of computing project completion time, by the system of FIG. 1, according to some embodiments of the present disclosure.
FIG. 3 is a flow diagram depicting steps involved in the process of generating a merged probability graph based on the historical project data, for computing project completion time, by the system of FIG. 1, according to some embodiments of the present disclosure.
FIG. 4 is a flow diagram depicting steps involved in the process of generating an instance precedence graph, for computing project completion time, by the system of FIG. 1, according to some embodiments of the present disclosure.
FIG. 5 is a flow diagram depicting steps involved in the process of computing the completion time of the instance precedence graph, for computing project completion time, by the system of FIG. 1, according to some embodiments of the present disclosure.
FIGS. 6A through 6C depict example diagrams associated with merged probability graph generation, by the system of FIG. 1, according to some embodiments of the present disclosure.
FIG. 7 and FIG. 8 are example diagrams depicting iterations of generating the plurality of instance precedence graphs, by the system of FIG. 1, according to some embodiments of the present disclosure.
FIG. 9 depicts example graphs depicting percentage deviation on predicted project completion time, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Traditional algorithms for computing/estimating project completion time often fail to provide accurate project duration estimates. The Constructive Cost Model (COCOMO) is one of the popular methodology for estimating software project duration. Pre-existing methods rely on project size and team size to estimate project duration and overlook the complex interdependencies between tasks and the variability in task execution times.

To address these challenges, a method and system for computing project completion time is provided. The system fetches a requirement vector of a target project as input, wherein the requirement vector represents count of tasks in the target project. Further, a plurality of instance precedence graphs of the target project are generated by processing the requirement vector along with a merged probability graph. The merged probability graph represents a transition likelihood between different types of tasks based on a historical project data. Further, a plurality of projects that are similar to the target project represented by the plurality of instance precedence graph are determined. Further, a completion time of the target project represented by the requirement vector is computed based on completion time of the plurality of projects that are similar to the target project.

Thus, the method and system disclosed herein capture complex interdependencies between tasks and the variability in task execution times for projects, causing more accurate and realistic project completion time estimation.

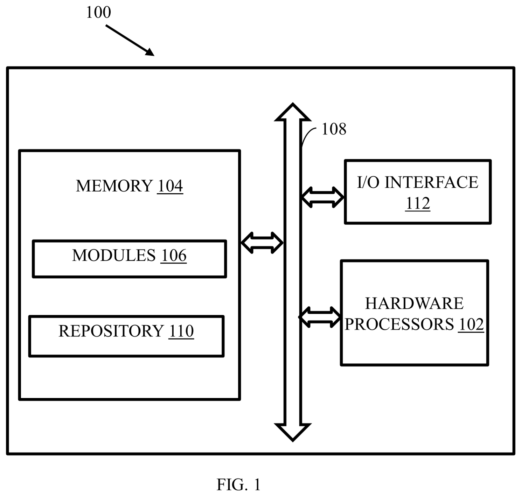

Referring now to the drawings, and more particularly to FIG. 1 through FIG. 9, where similar reference characters denote corresponding features consistently throughout the figures, there are shown preferred embodiments and these embodiments are described in the context of the following exemplary system and/or method.

FIG. 1 illustrates an exemplary system for computing project completion time, according to some embodiments of the present disclosure.

The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of computing project completion time, being performed by the system of FIG. 1. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for computing the project completion time.

The data repository (or repository) 110 may include a plurality of abstracted piece of code for refinement and data that is processed, received, or generated as a result of the execution of the plurality of modules in the module(s) 106.

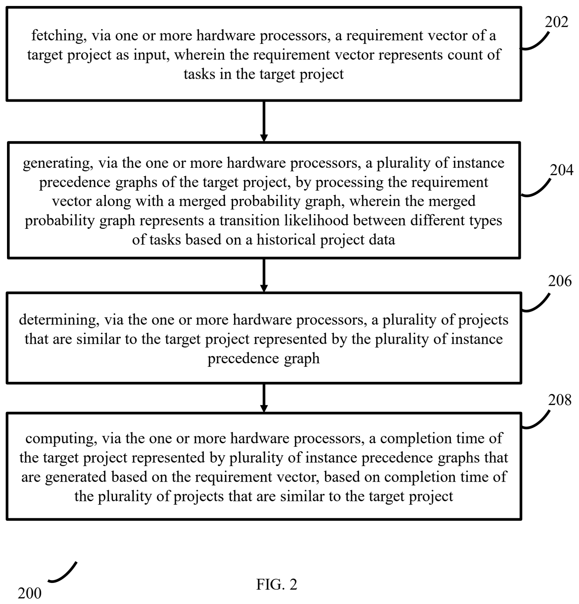

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Working of the components of the system 100 are now explained with reference to the steps in the flow diagrams in FIGS. 2 through 5.

FIG. 2 is a flow diagram depicting steps involved in the process of computing project completion time, by the system of FIG. 1, according to some embodiments of the present disclosure.

In an embodiment, the system 100 comprises one or more data storage devices or the memory 104 operatively coupled to the processor(s) 102 and is configured to store instructions for execution of steps of a method 200 in FIG. 2, by the processor(s) or one or more hardware processors 102. The steps of the method 200 of the present disclosure will now be explained with reference to the components or blocks of the system 100 as depicted in FIG. 1, and the steps of flow diagram as depicted in FIGS. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

At step 202 of method 200 of FIG. 2, the system 100 fetches, via the one or more hardware processors 102, a requirement vector of a target project as input. The requirement vector represents count of tasks in the target project. In an embodiment, the requirement vector is a part of a feature vector, and the feature vector may contain parameters other than the requirement vector, such as but not limited to precedence graph density, and precedence graph diameter.

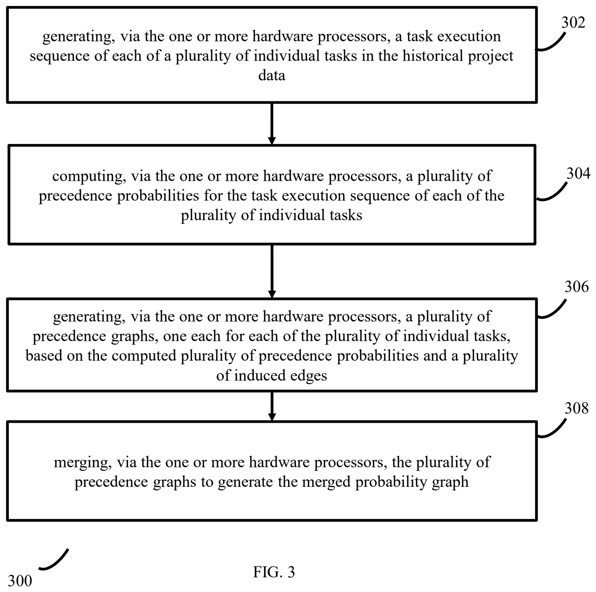

Further, at step 204 of the method 200, the system 100 generates, via the one or more hardware processors 102, a plurality of instance precedence graphs of the target project, by processing the requirement vector along with a merged probability graph. The merged probability graph represents a transition likelihood between different types of tasks based on a historical project data. The merged probability graph is generated using the approach in method 300 in FIG. 3, and the process is explained hereafter.

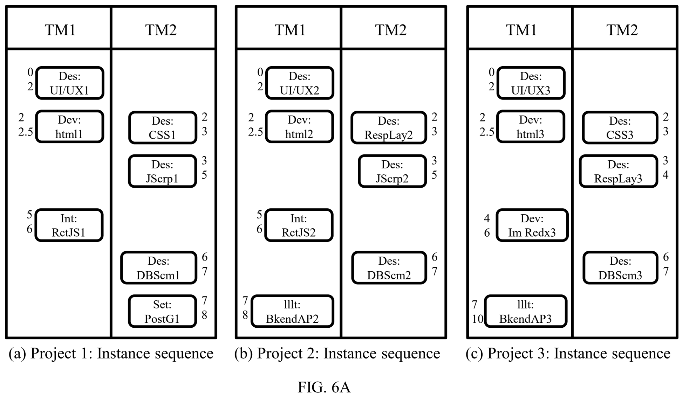

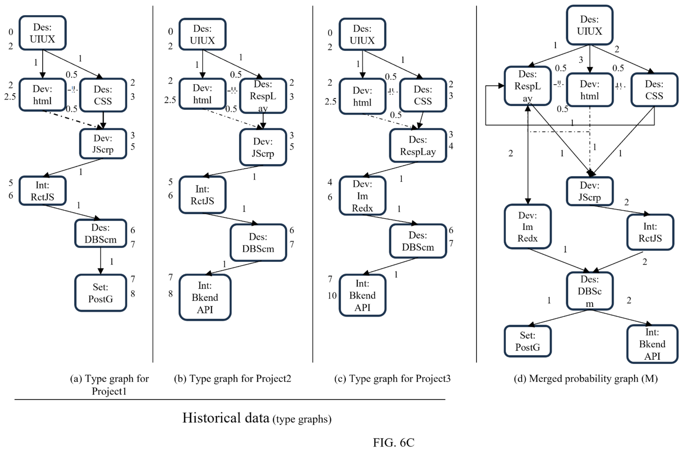

The merged probability graph is generated based on the historical project data. The historical project data may include data such as but not limited to: number of tasks, type of tasks, completion time of each of the tasks and the project as a whole, and information on various parameters, associated with one or more projects that have got executed in the past. At step 302 of the method 300, the system 100 generates, via the one or more hardware processors 102, a task execution sequence of each of a plurality of individual tasks in the historical project data. For explanation purpose, consider the example diagrams in FIGS. 6A through 6C, which show tasks specific to a software development project. FIG. 6A depicts execution sequence of task instances for three different projects, each of size 7 and completed by a team of 2 resources. In Project3, for instance, resource TM1 designs UI/UX from 0 to 2 hours, then develops HTML code from 2 to 2.5 hours. Concurrently, resource TM2 starts designing CSS styling at 2 hours and finishes the task at 3 hours. First step is to generate precedence graphs as depicted in (a),(b),(c) of FIG. 6C, from each of the sequence of tasks. To generate the precedence graphs, the following algorithm 1 is used.

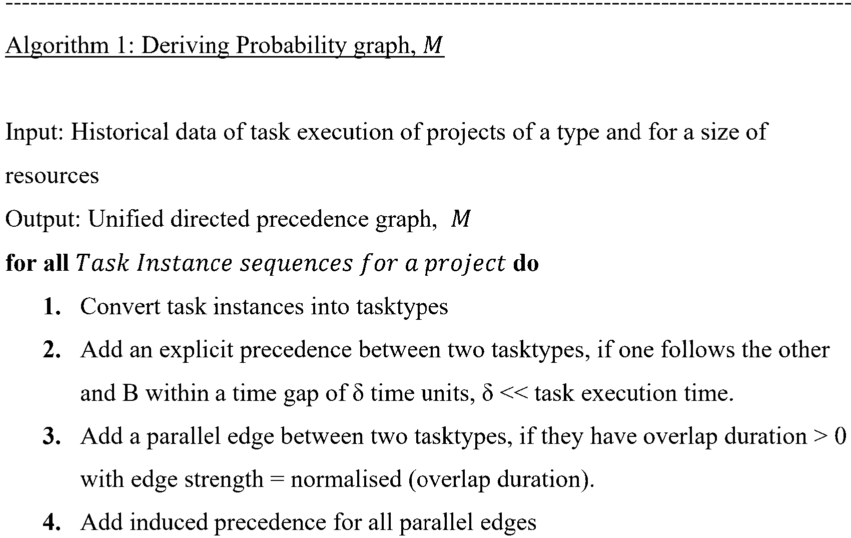

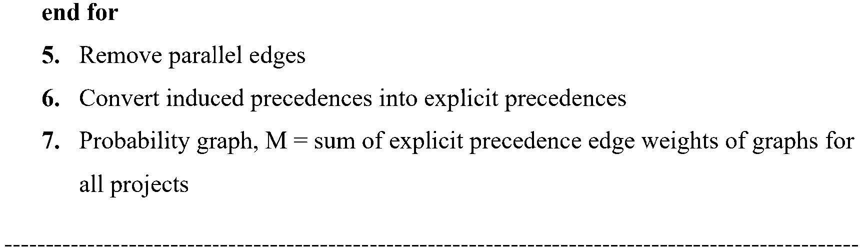

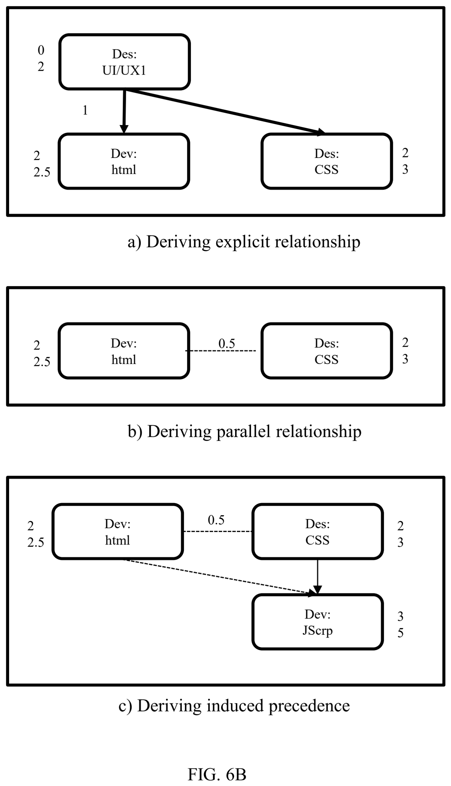

At step 304 of the method 300, the system 100 computes, as in the Algorithm 1, via the one or more hardware processors 102, a plurality of precedence probabilities for the task execution sequence of each of the plurality of individual tasks. The precedence probabilities computed for the considered example is depicted in FIG. 6B. In the process of computing the plurality of precedence probabilities, an explicit precedence between tasktypes A and B is added, if B immediately follows A within a time gap of δ time units, δ << task execution time. A parallel edge is added between tasktype A and B, if their overlap duration > 0 with edge strength = normalised (overlap duration) i.e. ratio of overlap duration and average of overlapping tasktype durations (here average of A and B durations). A parallel edge between two tasks indicates that these types of tasks are often performed simultaneously. An induced precedence is added between tasktype C and tasktype B, if tasktype A precedes tasktype B and tasktype A is parallel to tasktype C. Then the induced edge strength is the edge strength of the parallel edge between tasktype A and tasktype C.

Further, as in the Algorithm 1, at step 306 of the method 300, the system 100 generates, via the one or more hardware processors 102, a plurality of precedence graphs, one each for each of the plurality of individual tasks, based on the computed plurality of precedence probabilities and a plurality of induced edges corresponding to the induced precedence, by removing all parallel edges and by eliminating induced edges having a measured value of edge strength less than a threshold of edge strength. This is depicted in (a), (b), and (c) of FIG. 6C. Further, at step 308 of the method 300, the plurality of precedence graphs are merged, via the one or more hardware processors 102, to generate the merged probability graph. The merged probability graph generated for the considered example is depicted in (d) of FIG. 6C. A matrix representation of the merged probability graph is given below.

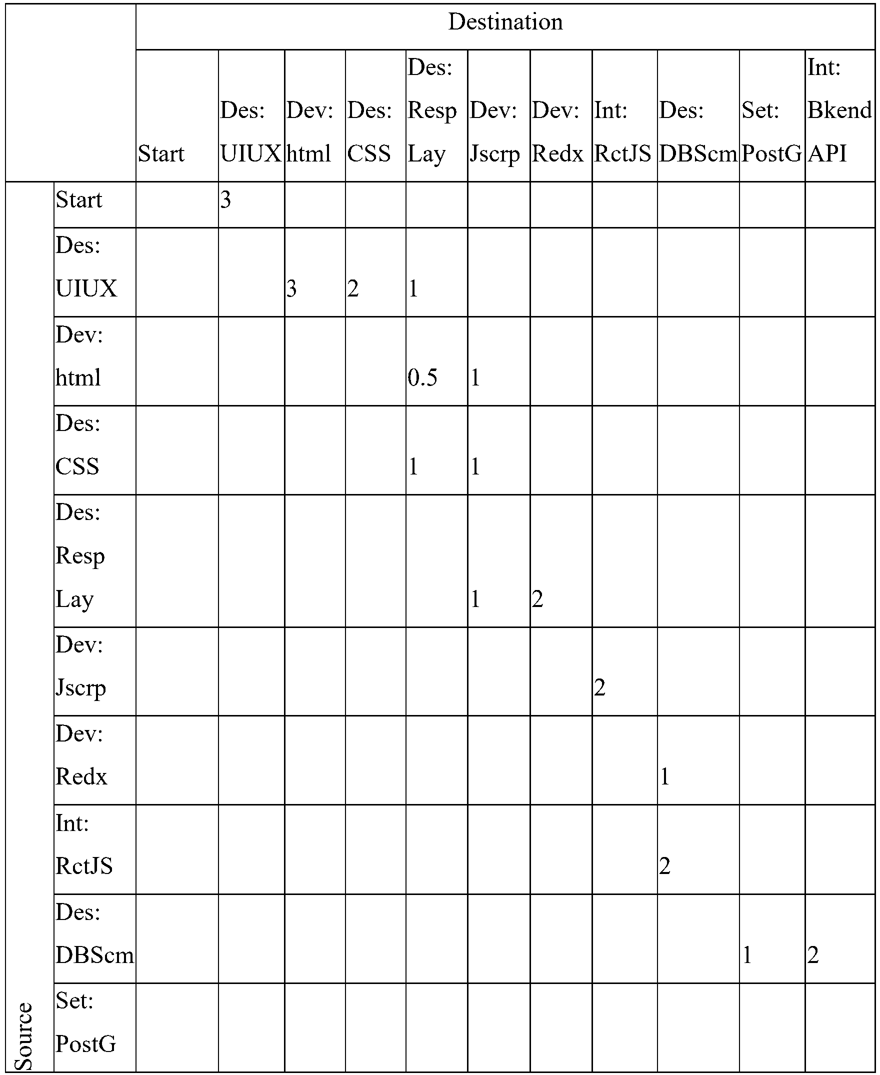

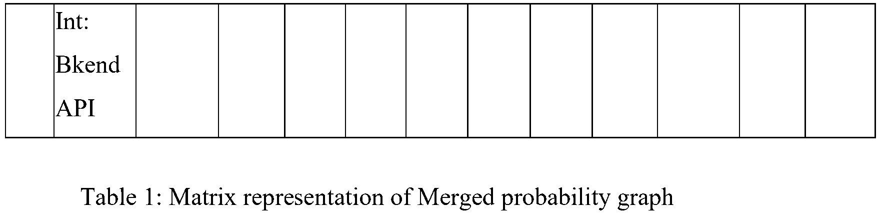

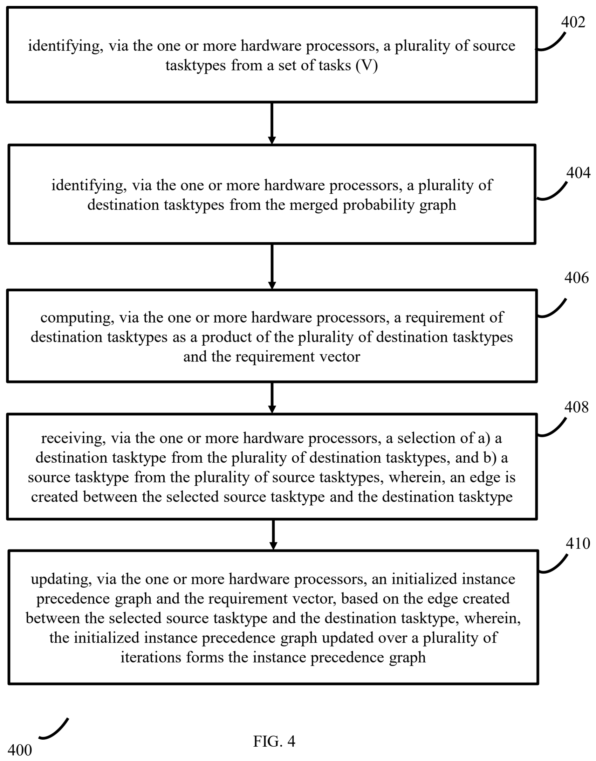

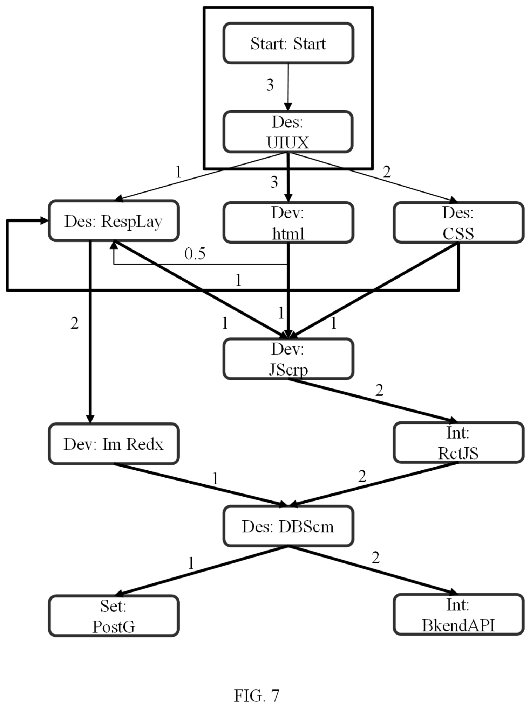

Further, steps involved in the process of generating the plurality of instance precedence graphs are depicted in method 400 in FIG. 4, and are explained hereafter. At step 402 of the method 400, the system 100 identifies, via the one or more hardware processors 102, a plurality of source tasktypes from a set of tasks (V). With reference to the example in FIG. 7, in a first iteration, the source tasktype = Start. The plurality of source tasktypes are identified based on at least one requirement specified by the requirement vector. If a new task instance is specified by the requirement vector, the new task instance is added to V, and in this process, an edge between a source node already in V and the new task instance is added based on counts in the probability graph matrix M. Ties due to equal counts are resolved randomly. Further, at step 404 of the method 400, the system 100 identifies, via the one or more hardware processors 102, a plurality of destination tasktypes from the merged probability graph. In FIG. 7, the destination tasktype = Des: UI/UX with weight 3. Further, at step 406 of the method 400, the system 100 computes, via the one or more hardware processors 102, a requirement of destination tasktypes as a product of the plurality of destination tasktypes and the requirement vector. For the example in FIG. 7, in the first iteration, value of the requirement of destination tasktypes is equal to 3. Further, at step 408 of the method 400, the system 100 receives, via the one or more hardware processors 102, a selection of a) a destination tasktype from the plurality of destination tasktypes, and b) a source tasktype from the plurality of source tasktypes. In FIG. 7, in the first iteration, there is only one type of destination, hence probability of the type of destination is 1. An edge is created between the selected source tasktype and the destination tasktype, i.e., between the Start task instance and the Des: UI/UX1 task instance. Further, at step 410 of the method 400, the system 100 updates, via the one or more hardware processors 102, an initialized instance precedence graph and the requirement vector, based on the edge created between the selected source tasktype and the destination tasktype. For instance, in the example in FIG. 7, updated *V =* {*Start, Des: UI*/*UXI*}*,* and updated *E =* {*Start - Des: UI*/*UX*}. The updation of the initialized instance precedence graph is done over a plurality of iterations. Number of the plurality of iterations depends on number (N) of task instances in the requirement vector (R). The iterations continue till N is equal to zero. For example, in the example of FIG. 7, count of *Des*: *UI*/*UX* is decreased by 1 after every iteration.

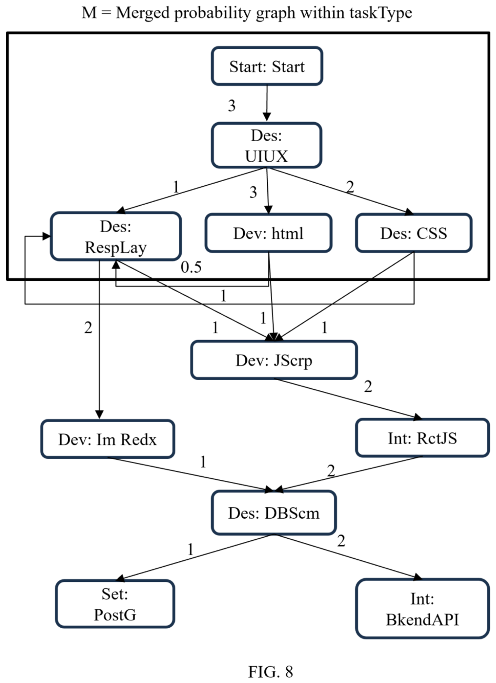

Now, in a second iteration, the steps are as follows: Initially, the set of source task types is *source - types = Start, Des: UI*/*UX.* Further, the destination node is *destination - types = Des: UI*/ *UX, Des: RespLay, Dev: html, Des: CSS* with weights {3, 1, 2, 2}. Refer FIG. 8. Further, the requirement of destination types is computed by taking a product destination-types * R. This product is {0,1,2,1}, in the example in FIG. 7, resulting in a probability vector {0.00,0.25,0.50,0.25}. Further, a new task instance of the typeDev: html1 is created based on probability distribution. Further, a source-task-instance is selected randomly as Des:UI/UX1. An edge between the Start task instance and Dev: html1 task instance is created. This results in an updated V= {Start, Des: UI/UX1, Dev: html1}, and updated E={Start-Des: UI/UX1; Des: UI/UX1-Dev: html1}. The requirement vector R is updated with a decreasing count of Dev: html type of tasks by 1. The initialized instance precedence graph upon completion of the updation over the plurality of iterations, forms the instance precedence graph. The method 400 is represented in an algorithm format below:

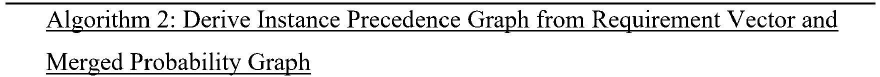

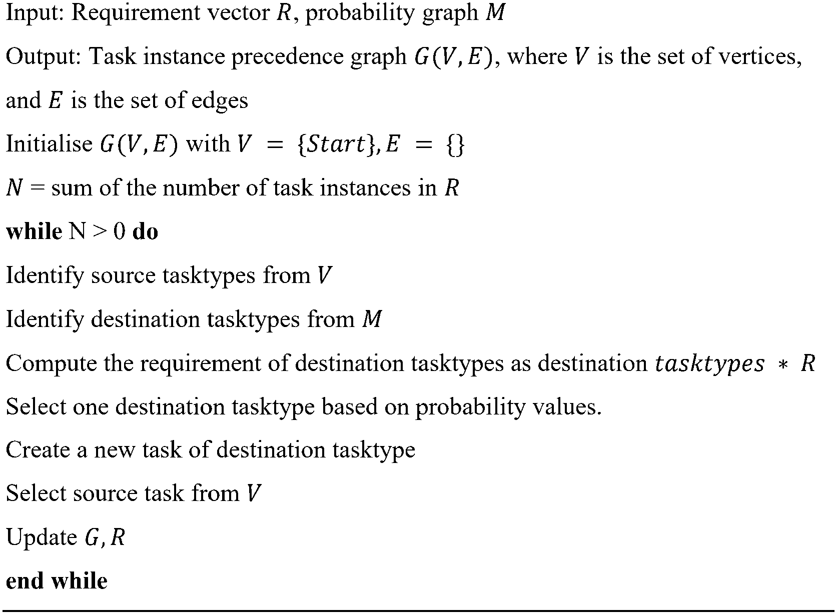

Referring back to the method 200, at step 206 of the method 200, the system 100 determines, via the one or more hardware processors 102, a plurality of projects that are similar to the target project represented by the plurality of instance precedence graph. The system 100 is configured to identify the similarity between the target project and the plurality of similar projects, based on the requirement vector, present in each of the projects, i.e., all the projects that have the same requirement vector are identified as similar projects.

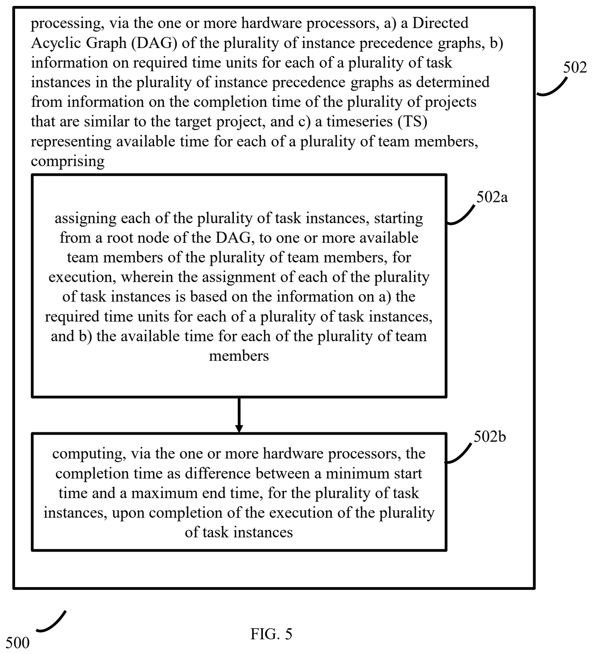

Further, at step 208 of the method 200, the system 100 computes, via the one or more hardware processors 102, a completion time of the target project represented by the requirement vector, based on completion time of the plurality of projects that are similar to the target project. Various steps in the process of computing the completion time of the instance precedence graph are depicted in method 500 in FIG. 5, and are explained hereafter. At step 502 of the method 500, the system 100 processes, via the one or more hardware processors 102, a) a Directed Acyclic Graph (DAG) of the instance precedence graph, b) information on required time units for each of a plurality of task instances in the instance precedence graph as determined from information on the completion time of the plurality of projects that are similar to the target project, and c) a timeseries (TS) representing available time for each of a plurality of team members, comprising. The step of processing the aforementioned data further includes the steps 502a and 502b. At step 502a, the system 100 assigns each of the plurality of task instances, starting from a root node of the DAG, to one or more available team members of the plurality of team members, for execution. The assignment of each of the plurality of task instances is based on the information on a) the required time units for each of a plurality of task instances, and b) the available time for each of the plurality of team members. Further, the completion time is computed as difference between a minimum start time and a maximum end time, for the plurality of task instances, upon completion of the execution of the plurality of task instances. The root node represents a first task, having all subsequent tasks forming a plurality of child nodes, and one or more child nodes of each of the plurality of child nodes, of the root node, wherein, each of the subsequent tasks has a start time matching to end time or a time later than the end time of the first task, represented as parent of the subsequent tasks in the DAG, where a directed edge imparts a sense of time or emphasizes the importance of timing. In the DAG, the root node is one which is only parent node and leaf nodes are those which are only child nodes. All intermediate nodes are child of some parent node and are parent of associated child nodes. The method 500 is represented in an algorithm format as below:

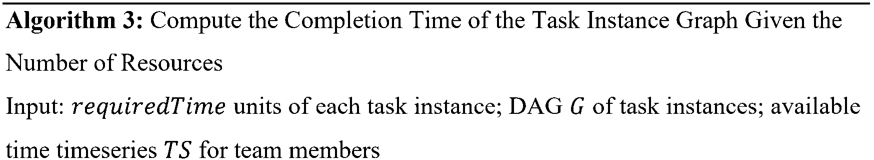

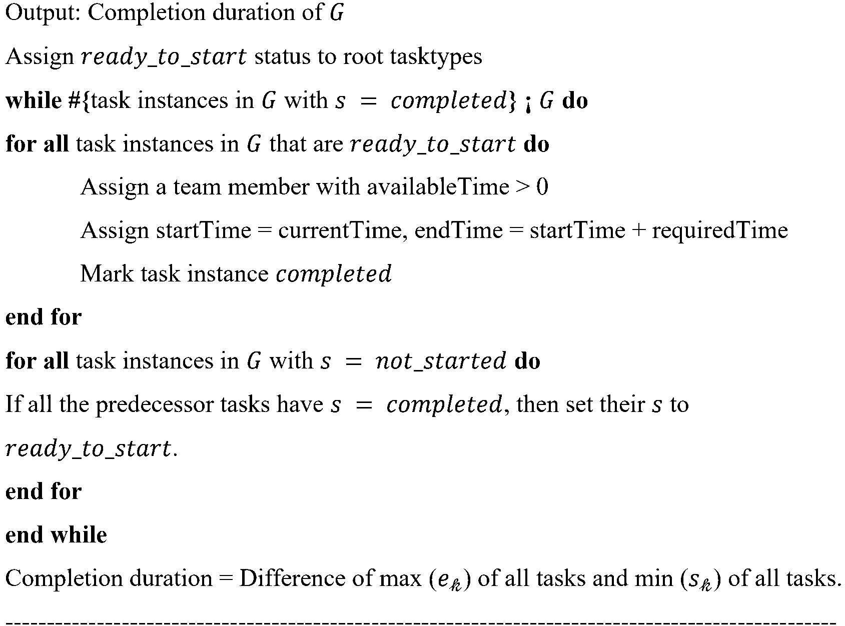

The computed completion time of the target project is then given as output of the system 100, via one or more user interfaces provided, by the system 100. The information on the computed completion time may help user(s) plan the project accordingly, for example, when more than one project is in pipeline to be executed, having clarity on the completion time may help allocate the resources and accordingly schedule the projects.

### Experimental Data:

In an experimental setup, two distinct experimentations were carried out- one, sensitivity analysis on synthetic data, and the other, on real data. The synthetic data is generated as project's task sequences. The synthetic data was generated mirroring the structure of real-world project management data. The graph size was changed from 10 to 60 and team size from 1 to 5. A total of 1000 project sequences were generated. A unified probability graph was derived from 800 of the project sequences capturing the most probable sequence of task execution in historical data. The probability graph was then used to predict completion duration for the remaining 200 graphs. For each test instance project, 10 instance graphs were generated. An average of completion duration of these 10 graphs was finally returned as an estimated duration. In the method 200, the final duration of the project is not a singular estimate. Instead, this is predicted as a range or distribution of potential values.

### Observations

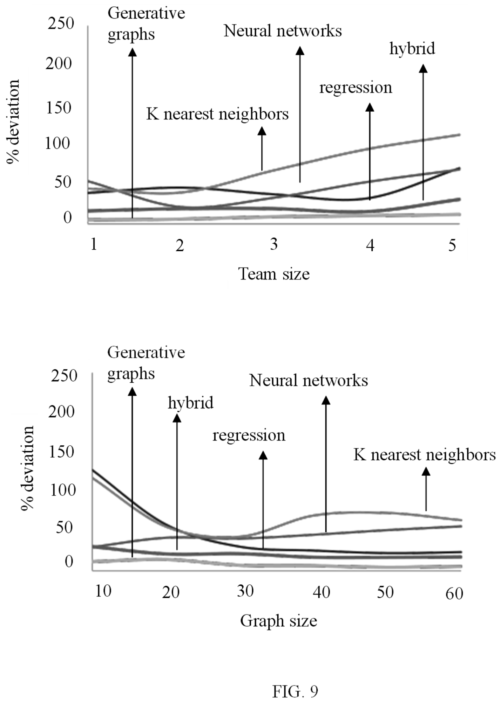

During the experiments, it was observed that with changing graph size and team size, the generative graph based method follows the pattern of actual duration better than the Nearest Neighbor based method. Percentage deviation errors is depicted in FIG. 9. Regression error was largest and was found to be decreasing with the graph size and team size. Neural Network error was lower than Regression and was more or less the same with increasing graph size or with increasing team size. k-Nearest Neighbor error was unpredictably increasing with graph size and team size. The error in Nearest Neighbors' Neural Network was also low and was more or less the same with increasing graph size or with increasing team size.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of computation of project completion time. The embodiment, thus provides a mechanism for identifying projects that are similar to a target project. Moreover, the embodiments herein further provide a mechanism for computation of the project completion time based on completion time of the projects that have been identified as similar to the target project.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:
fetching (202), via one or more hardware processors, a requirement vector of a target project as input, wherein the requirement vector represents count of tasks in the target project;
generating (204), via the one or more hardware processors, a plurality of instance precedence graphs of the target project, by processing the requirement vector along with a merged probability graph, wherein the merged probability graph represents a transition likelihood between different types of tasks based on a historical project data;
determining (206), via the one or more hardware processors, a plurality of projects that are similar to the target project represented by the plurality of instance precedence graph; and
computing (208), via the one or more hardware processors, a completion time of the target project represented by the plurality of instance precedence graphs that are generated based on the requirement vector, based on the completion time of the plurality of projects that are similar to the target project.

2. The processor implemented method as claimed in claim 1, wherein the similarity between the target project and the plurality projects that are similar to the target project is determined based on the requirement vector, present in the target project and in each of the plurality projects that is similar to the target project.

3. The processor implemented method as claimed in claim 1, wherein the merged probability graph is generated based on the historical project data, comprising:
generating (302), via the one or more hardware processors, a task execution sequence of each of a plurality of individual tasks in the historical project data;
computing (304), via the one or more hardware processors, a plurality of precedence probabilities for the task execution sequence of each of the plurality of individual tasks;
generating (306), via the one or more hardware processors, a plurality of precedence graphs, one each for each of the plurality of individual tasks, based on the computed plurality of precedence probabilities and a plurality of induced edges; and
merging (308), via the one or more hardware processors, the plurality of precedence graphs to generate the merged probability graph.

4. The processor implemented method as claimed in claim 1, wherein generating each of the plurality of instance precedence graphs comprises:
identifying (402), via the one or more hardware processors, a plurality of source tasktypes from a set of tasks (V);
identifying (404), via the one or more hardware processors, a plurality of destination tasktypes from the merged probability graph;
computing (406), via the one or more hardware processors, a requirement of destination tasktypes as a product of the plurality of destination tasktypes and the requirement vector;
receiving (408), via the one or more hardware processors, a selection of a) a destination tasktype from the plurality of destination tasktypes, and b) a source tasktype from the plurality of source tasktypes, wherein, an edge is created between the selected source tasktype and the destination tasktype; and
updating (410), via the one or more hardware processors, an initialized instance precedence graph and the requirement vector, based on the edge created between the selected source tasktype and the destination tasktype, wherein, the initialized instance precedence graph updated over a plurality of iterations forms the instance precedence graph.

5. The processor implemented method as claimed in claim 1, wherein computing the completion time of the target project represented by the plurality of instance precedence graphs comprises:
processing (502), via the one or more hardware processors, a) a Directed Acyclic Graph (DAG) of the plurality of instance precedence graphs, b) information on required time units for each of a plurality of task instances in the plurality of instance precedence graphs as determined from information on the completion time of the plurality of projects that are similar to the target project, and c) a timeseries (TS) representing available time for each of a plurality of team members, comprising:
assigning (502a) each of the plurality of task instances, starting from a root node of the DAG, to one or more available team members of the plurality of team members, for execution, wherein the assignment of each of the plurality of task instances is based on the information on a) the required time units for each of a plurality of task instances, and b) the available time for each of the plurality of team members; and
computing (502b) the completion time as difference between a minimum start time and a maximum end time, for the plurality of task instances, upon completion of the execution of the plurality of task instances.

6. The processor implemented method as claimed in claim 5, wherein the root node represents a first task, having all subsequent tasks forming a plurality of child nodes and one or more child nodes of each of the plurality of child nodes, of the root node, wherein, each of the subsequent tasks has a start time matching to end time or a time later than the end time of the first task.

7. A system (100), comprising:
one or more hardware processors (102);
a communication interface (112); and
a memory (104) storing a plurality of instructions, wherein the plurality of instructions cause the one or more hardware processors to:
fetch a requirement vector of a target project as input, wherein the requirement vector represents count of tasks in the target project;
generate a plurality of instance precedence graphs of the target project, by processing the requirement vector along with a merged probability graph, wherein the merged probability graph represents a transition likelihood between different types of tasks based on a historical project data;
determine a plurality of projects that are similar to the target project represented by the plurality of instance precedence graph; and
compute a completion time of the target project represented by the plurality of instance precedence graphs that are generated based on the requirement vector, based on the completion time of the plurality of projects that are similar to the target project.

8. The system as claimed in claim 7, wherein the one or more hardware processors are configured to determine the similarity between the target project and the plurality projects that are similar to the target project, based on the requirement vector, present in the target project and in each of the plurality projects that is similar to the target project.

9. The system as claimed in claim 7, wherein the one or more hardware processors are configured to generate the merged probability graph based on the historical project data, by:
generating a task execution sequence of each of a plurality of individual tasks in the historical project data;
computing a plurality of precedence probabilities for the task execution sequence of each of the plurality of individual tasks;
generating a plurality of precedence graphs, one each for each of the plurality of individual tasks, based on the computed plurality of precedence probabilities and a plurality of induced edges; and
merging the plurality of precedence graphs to generate the merged probability graph.

10. The system as claimed in claim 7, wherein the one or more hardware processors are configured to generate each of the plurality of instance precedence graphs, by:
identifying a plurality of source tasktypes from a set of tasks (V);
identifying a plurality of destination tasktypes from the merged probability graph;
computing a requirement of destination tasktypes as a product of the plurality of destination tasktypes and the requirement vector;
receiving a selection of a) a destination tasktype from the plurality of destination tasktypes, and b) a source tasktype from the plurality of source tasktypes, wherein, an edge is created between the selected source tasktype and the destination tasktype; and
updating an initialized instance precedence graph and the requirement vector, based on the edge created between the selected source tasktype and the destination tasktype, wherein, the initialized instance precedence graph updated over a plurality of iterations forms the instance precedence graph.

11. The system as claimed in claim 7, wherein the one or more hardware processors are configured to compute the completion time of the target project represented by the plurality of instance precedence graphs, by:
processing a) a Directed Acyclic Graph (DAG) of the plurality of instance precedence graphs, b) information on required time units for each of a plurality of task instances in the plurality of instance precedence graphs as determined from information on the completion time of the plurality of projects that are similar to the target project, and c) a timeseries (TS) representing available time for each of a plurality of team members, comprising:
assigning each of the plurality of task instances, starting from a root node of the DAG, to one or more available team members of the plurality of team members, for execution, wherein the assignment of each of the plurality of task instances is based on the information on a) the required time units for each of a plurality of task instances, and b) the available time for each of the plurality of team members; and
computing the completion time as difference between a minimum start time and a maximum end time, for the plurality of task instances, upon completion of the execution of the plurality of task instances.

12. The system as claimed in claim 11, wherein the root node represents a first task, having all subsequent tasks forming a plurality of child nodes and one or more child nodes of each of the plurality of child nodes, of the root node, wherein, each of the subsequent tasks has a start time matching to end time or a time later than the end time of the first task.

13. One or more non-transitory machine-readable information storage mediums comprising one or more instructions which when executed by one or more hardware processors cause:
fetching a requirement vector of a target project as input, wherein the requirement vector represents count of tasks in the target project;
generating a plurality of instance precedence graphs of the target project, by processing the requirement vector along with a merged probability graph, wherein the merged probability graph represents a transition likelihood between different types of tasks based on a historical project data;
determining a plurality of projects that are similar to the target project represented by the plurality of instance precedence graph; and
computing a completion time of the target project represented by the plurality of instance precedence graphs that are generated based on the requirement vector, based on the completion time of the plurality of projects that are similar to the target project.
